**Europäisches Patentamt**

**European Patent Office**

**Office européen des brevets**

(11) Veröffentlichungsnummer: **0 149 148**
**B1**

(19)

(12) # EUROPÄISCHE PATENTSCHRIFT

(45) Veröffentlichungstag der Patentschrift:
08.04.87

(21) Anmeldenummer: **84115315.8**

(22) Anmeldetag: **12.12.84**

(51) Int. Cl.⁴: **C 09 K 11/85**, G 21 K 4/00

(54) **Röntgenbild-Speicherschirm.**

(30) Priorität: **27.12.83 DE 3347207**

(43) Veröffentlichungstag der Anmeldung:
**24.07.85 Patentblatt 85/30**

(45) Bekanntmachung des Hinweises auf die Patenterteilung:
**08.04.87 Patentblatt 87/15**

(84) Benannte Vertragsstaaten:
**BE DE FR**

(56) Entgegenhaltungen:
**FR-A-2 286 872**
**FR-A-2 306 250**

(73) Patentinhaber: **Siemens Aktiengesellschaft Berlin und München, Wittelsbacherplatz 2, D-8000 München 2 (DE)**

(72) Erfinder: **Degenhardt, Heinz, Dr., Anderlohrstrasse 18, D-8520 Erlangen (DE)**

**Beschreibung**

Die Erfindung betrifft einen Röntgenbild-Speicherschirm nach dem Oberbegriff des Patentanspruchs 1. Derartige Schirme werden etwa in Aufnahmegeräten zur Überführung von Röntgenbildern in Fernsehbilder verwendet. Eine solche Anordnung ist etwa aus der US-PS 39 75 637 bekannt.

In Speicherschichten werden bekanntlich Phosphoreszenzstoffe eingesetzt, aus denen gespeicherte Signale mit Hilfe eines Laserstrahls abgerufen werden können. Die Speicherung erfolgt bekanntlich dadurch, daß das einfallende Röntgenbild im Speicherstoff Elektronen auslöst, die eingefangen und festgehalten werden. Zum Auslesen wird dann die Schicht zeilenweise mit einem Infrarotstrahl, d.h. in der Regel einem Laserstrahl, abgetastet. Dabei werden die eingefangenen Elektronen freigesetzt und emittieren Licht. Dieses kann schließlich in einem optischen Detektor, etwa einem Sekundärelektronenvervielfacher, in eine der Abtastung entsprechende Signalfolge umgesetzt werden. Diese Folge kann dann in der beim Fernsehen üblichen Weise bearbeitet und sichtbar gemacht werden.

Zur Speicherung und Auslesung werden hochempfindliche, durch Strahlen stimulierbare Röntgenleuchtstoffe benötigt. Die bekannten Stoffe dieser Art, etwa diejenigen, die in vorgenannter US-PS 39 75 637 angegeben sind, d.h. insbesondere Alkali- und Erdalkalihalogenide, Sulfate, Borate sowie Sulfide und Silikate, weisen aber für den Einsatz in der medizinischen Röntgentechnik zu geringe Infrarotstimulierbarkeit auf.

Eine gewisse Verbesserung wurde mit aktivierten Bariumfluorohalogenid-Leuchtstoffen erreicht. Dabei weist aber das Bariumfluorohalogenid nach der EP-A- 00 21 174, das zusätzlich noch ein weiteres Erdalkali bzw. Zink oder Cadmium enthält und dessen Aktivator Europium ist, zu große Trägheit auf, d.h. die Abtastgeschwindigkeit ist zu gering.

Auch aus der EP-B- 00 21 342 ist ein Bariumfluorohalogenid-Leuchtstoff bekannt, der Aktivatoren enthält. Einer davon (Zeilen 1/2, Seite 7) besteht aus gleichen Mengen Bariumfluorid $(BaF_2)$ und Bariumbromid $(BaBr_2)$ und enthält als Aktivator 0,1 mol Strontiumfluorid $(SrF_2)$ sowie Europiumchlorid $(EuCl_3)$. Ein derartiger Leuchtstoff ist zwar, wie in dieser Schrift angegeben, hinsichtlich der erzielbaren Ausleuchthelligkeit verbessert. Er ist aber chemisch nicht stabil.

Die Erfindung hat sich die Aufgabe gestellt, für einen Röntgenbild-Speicherschirm der eingangs genannten Art einen sehr flinken und hochempfindlichen Speicherleuchtstoff anzugeben. Diese Aufgabe wird erfindungsgemäß durch die im Kennzeichen des Anspruchs 1 enthaltenen Merkmale gelöst.

Erst durch die erfindungsgemäSe Benutzung einer geeigneten Zusammensetzung konnte einerseits die Empfindlichkeit und andererseits die Schnelligkeit des Ausleuchtens gesteigert werden. Es hat sich gezeigt, daß sich ein Signal-Optimum erreichen läßt, wenn die Mischungsreihe Bariumfluorid zu Bariumchlorid und Bariumbromid $(BaF_2\text{-}BaCl_2\text{-}BaBr_2)$ so liegt, daß sich für $BaF_2$ 0,6 mol ergeben; das Fluorid und Bromid wird dann auf die verbleibenden 0,4, in der Regel auf jeweils 0,2, verteilt. So wird ein Leuchtstoff erhalten, der beim Auslesen mit einem Helium-Neon-Laser von 5 mW Leistung ein Optimun ergibt und einer Formel entspricht, die lautet:

$$BaF_{0,6}(Cl_{0,2}, Br_{0,2}): Eu: Sr$$

wobei die Konzentrationen der Aktivatoren sich zu

Eu: $\leq 10^{-4}$ g-atom Eu/mol BaF (Cl, Br)

Sr: $\leq 10^{-2}$ g-atom SR/mol BaF (Cl, Br)

Die sich dabei bildenden Mischkristalle zeigen tetragonale Kristallstruktur. Sie weisen einen Glow-peak bei 335/K auf.

Bei optimaler Zusammensetzung weist der Leuchtstoff gegenüber den üblichen Bariumfluorohalogenid-Leuchtstoffen eine Wirkung auf, die zu einem doppelt so hohen Signal wie bei BaFCl und einer um den Faktor 8 geringeren Zeitkonstanten wie beim BaFCl führt. Die Zeitkonstante des neuen Leuchtstoffes ist sogar noch um einen Faktor 2 besser als das in der erstgenanten europäischen Auslegeschrift genannte BaFBr. Hinzu kommt, daß der neue Leuchtstoff gegenüber Feuchtigkeit wesentlich stabiler ist als der bekannte Leuchtstoff.

Gegenüber dem aus der EP-B- 00 21 342 bekannten Leuchtstoff, der oben bereits erwähnt ist, ergibt sich eine Verbesserung hinsichtlich der Höhe des Signals um den Faktor 2 und hinsichtlich der Zeitkonstanten um einen Faktor von 2. Gegenüber Feuchtigkeit ist der hier angegebene Leuchtstoff stabil, während der obengenannte bekannte Leuchtstoff, der kein $BaCl_2$ und um eine Grössenordnung mehr Sr enthält, sich in Wasser zersetzt.

Bei der Herstellung eines Leuchstoffes nach der Erfindung kann man z.B. ausgehen von 0,6 mol $BaF_2$ und jeweils 0,2 mol $BaCl_2$ und $BaBr_2$. Diese Stoffe werden dann in einer Kugelmühle zusammen mit $10^{-4}$ mol $EuF_3$ und $10^{-2}$ mol SrCl vermischt. Nach Beendigung des Durchmischvorganges wird das so vorbereitete Rohmaterial des Leuchtstoffes in einen Glühtiegel gebracht und 1 bis 5, insbesondere 2, Stunden auf +800°C bis +1000°C, insbesondere +800°C, in einer Bromdampfatmosphäre geglüht. Schließlich wird nach dem Abkühlen das Produkt zerkleinert und mit Wasser gewaschen und getrocknet. So wird ein Leuchtstoff erhalten, der die in den nachfolgenden Figuren dargestellten Eigenschaften aufweist.

In der Figur 1 ist das mit dem Leuchtstoff erzielbare Ausleuchtsignal und

in der Figur 2 die erzielbare Verbesserung der Ausleuchtzeitkonstanten gezeichnet.

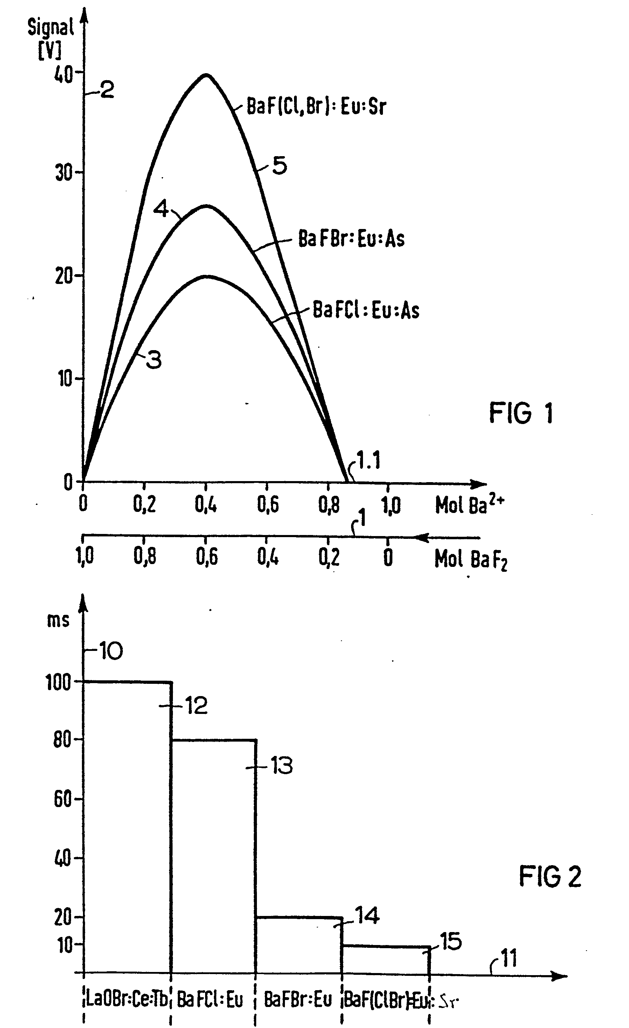

In der Figur 1 sind an einer Abszisse 1 die im jeweiligen Leuchtstoff verwendeten Mengen

Bariumfluorid (BaF$_2$) und an einer darüberliegenden Abszisse 1.1 die Mengen der im jeweiligen Leuchtstoff verwendeten anderen Bariumhalogenide angegeben, während in Richtung der Ordinate 2 das erzielbare Signal aufgetragen ist. Dies hat ergeben, daß für einen BaFCl:Eu = As-Leuchtstoff sich eine Kurve 3 ergibt, die bei dem erfindungsgemäß anzustrebenden Verhältnis von 0,6 mol Bariumfluorid zu 0,4 mol übrigen Bariumhalogeniden ein Optimum aufweist, das bei etwa 20 Signalvolt liegt. Bei einer weiteren Kurve 4 für einen Leuchtstoff aus BaFBr:Eu:As ergibt sich das gleiche Verhältnis bei allerdings einem Signal von etwa 37 V. Eine Kurve 5, die für den erfindungsgemäßen Leuchtstoff gezeichnet ist, ergibt ein optimales Signal bei 40 V, welches ebenfalls bei dem vorgenannten optimalen Verhältnis von BaF$_2$:BaHal$_2$ liegt.

In der Figur 2 sind in einem Diagramm, dessen Ordinate 10 die Millisekunden der Ausleucht-Zeitkonstanten angibt, an der Abszisse 11 nebeneinander Säulen gezeichnet, die für die in Vergleich genommenen Leuchtstoffe stehen. Wenn man davon ausgeht, daß die erste Säule 12 für einen Leuchtstoff aus Lanthanoxibromid steht, welches mit Cer und Terbium aktiviert ist und eine Zeitkonstante von 100 ms aufweist, dann ergibt sich für BaFCl:Eu eine Säule 13 mit einer Höhe von 80, für einen Leuchtstoff BaFBr:Eu eine Säule 14 der Höhe 20 und für den erfindungsgemäßen Leuchtstoff BaF (Cl, Br): Eu: Sr eine Säule 15, die nur noch 10 ms hoch ist. Auch aus dieser Darstellung ergibt sich die Überlegenheit des erfindungsgemäßen Leuchtstoffes.

## Patentansprüche

1. Röntgenbild-Speicherschirm, dessen Speicherschicht als aktiven Stoff ein Erdalkali-Mischhalogenid der Formel BaF (X, Y): Eu: Sr enthält, <u>dadurch gekennzeichnet</u>, daß in 1 mol aktiven Stoff 0,4 bis 0,8, insbesondere 0,6, Mol Bariumfluorid (BaF$_2$) enthalten ist und der zu 1 mol fehlende Rest zu wenigstens angenähert gleichen Teilen aus Bariumchlorid (BaCl$_2$) und Bariumbromid (BaBr$_2$), insbesondere 0,2 mol BaCl$_2$ und 0,2 mol BaBr$_2$, besteht und daß die Menge der darin enthaltenen Aktivatoren bis zu 10$^{-4}$ g-atom Europium (Eu) und bis zu 10$^{-2}$ g-atom Strontium (Sr), insbesondere 5 - 10$^{-5}$ g-atom Eu und 10$^{-3}$ g-atom Sr, beträgt.

2. Röntgenbild-Speicherschirm nach Anspruch 1, <u>dadurch gekennzeichnet</u>, daß die Konzentration der Aktivatoren zwischen 10$^{-5}$ und 10$^{-4}$ g-atom Eu sowie 10$^{-4}$ bis 10$^{-2}$ g-atom Sr liegt.

## Claims

1. An X-ray image storage screen, the storage layer of which contains an alkaline earth mixed halide of the formula BaF (X, Y): Eu: Sr as active material, <u>characterised in</u> that in 1 mol of active material is contained 0.4 to 0.8, in particular 0.6 mol, of barium fluoride (BaF$_2$) and the remainder of the 1 mol, consists at least approximately of equal parts of barium chloride (BaCl$_2$) and barium bromide (BaBr$_2$), particularly but not exclusively 0.2 mol of BaCl$_2$ and 0.2 mol of BaBr$_2$; and that the amount of the activators contained therein is up to 10$^{-4}$ g-atom of europium (Eu) and up to 10$^{-2}$ g-atom of strontium (Sr), in particular 5.10$^{-5}$ g-atom of Eu and 10$^{-3}$ g-atom of Sr.

2. An X-ray image storage screen as claimed in Claim 1, <u>characterised in</u> that the concentration of the activators ranges between 10$^{-5}$ and 10$^{-4}$ g-atom of Eu and 10$^{-4}$ to 10$^{-2}$ g-atom of Sr.

## Revendications

1. Ecran d'enregistrement pour image radiographique, dont la couche de stockage contient, comme substance active, un halogénure mixte alcalino-terreux répondant à la formule BaF (X, Y): Eu: Sr, caractérisé par le fait que dans 1 mole de substance active, se trouve contenu entre 0,4 et 0,8 et notamment 0,6 mole de fluorure de barium (BaF$_2$) et que le reste, réalisant le complément à 1 mole, est constitué en parts au moins approximativement identiques par du chlorure de barium (BaCl$_2$) et du bromure de barium (BaBr$_2$) notamment par 0,2 mole de BaCl$_2$ et par 0,2 mole de BaBr$_2$ et que la quantité des activateurs, qui s'y trouvent contenus, est égale jusqu'à 10$^{-4}$ atome-gramme d'europium (Eu) et jusqu'à 10$^{-2}$ atome-gramme de strontium (Sr), et notamment 5.10$^{-5}$ atome-gramme de Eu et 10$^{-3}$ de Sr.

2. Ecran d'enregistrement pour image radiographique caractérisé par le fait que la concentration des activateurs est située entre 10$^{-5}$ et 10$^{-4}$ atome-gramme de Eu et entre 10$^{-4}$ et 10$^{-2}$ atome-gramme de Sr.

FIG 1

FIG 2